# EUROPÄISCHE PATENTSCHRIFT

(11) **EP 0 944 903 B1**
(45) Veröffentlichungstag und Bekanntmachung des Hinweises auf die Patenterteilung: **23.05.2001**
(21) Anmeldenummer: 97911123.4
(22) Anmeldetag: 01.10.1997
(51) Int. Cl.: G11B 27/00, G11B 27/11, G11B 27/34, G11B 33/10

(54) **ABSPIELGERÄT**
PLAYBACK DEVICE
DISPOSITIF DE LECTURE

(30) Priorität: 11.12.1996 DE 19651411
(43) Veröffentlichungstag der Anmeldung: 29.09.1999
(73) Patentinhaber: ROBERT BOSCH GMBH, 70442 Stuttgart (DE)
(72) Erfinder: GERLINGS, Karl-Heinz, D-38259 Salzgitter (DE); STRAUSS, Dirk, D-31199 Diekholzen (DE)
(86) Internationale Anmeldenummer: DE9702259
(87) Internationale Veröffentlichungsnummer: WO9826417

(56) Entgegenhaltungen:
- EP-A- 0 600 438
- EP-A- 0 703 579
- WO-A-92/07360
- WO-A-92/22063
- BE-A- 886 928
- DE-C- 4 121 698
- US-A- 5 644 558
- PATENT ABSTRACTS OF JAPAN vol. 017, no. 020 (P-1469), 14.Januar 1993 & JP 04 245085 A (KENWOOD CORP), 1.September 1992,
- PATENT ABSTRACTS OF JAPAN vol. 096, no. 001, 31.Januar 1996 & JP 07 244968 A (CLARION CO LTD), 19.September 1995,

## Beschreibung

### Stand der Technik

Die Erfindung geht von einem Abspielgerät nach der Gattung des Hauptanspruchs aus.

Aus dem Blaupunkt-Katalog "Mobile Audio Systeme '95/'96" ist bereits das Autoradio Berlin RCM303-A bekannt, bei dem ein Zehnfach-Compact-Disc-Wechsler vorgesehen ist. Dieses Autoradio ist mit einer Disc-Benennungsfunktion ausgestattet, mit deren Hilfe der gerade gehörten Compact-Disc ein beliebiger Name gegeben werden kann. Dieser Name erscheint dann bei jedem Abspielen der Compact-Disc im Display.

Aus der Druckschrift "patent abstracts of Japan, vol. 017, no. 020 (P-1469)" ist ein Abspielgerät für Aufzeichnungsträger bekannt, bei dem über eine Fernbedienung eine Speicherposition in einem SRAM des Abspielgerätes ausgewählt werden kann, wobei ein Submikrocomputer auf diese Speicherposition zugreift und über einen Mikrocomputer einen an dieser Speicherposition gespeicherten Namen eines Aufzeichnungsträgers zur Darstellung an einer Anzeigevorrichtung bringt. Wenn der Name des Aufzeichnungsträgers an der Anzeigevorrichtung dargestellt ist, kann er durch Betätigung einer Löschtaste an der Fernbedienung über den Submikrocomputer aus dem SRAM gelöscht werden. Dieses Gerät wird als nächster Stand der Technik angesehen.

### Vorteile der Erfindung

Das erfindungsgemäße Abspielgerät mit den Merkmalen des Hauptanspruchs hat demgegenüber den Vorteil, daß ein Benutzer mittels der Eingabeeinheit einen Aufzeichnungsträger nach seinen eigenen Vorstellungen und Wünschen benennen kann. Weiterhin können auch Namen für Aufzeichnungsträger an der Anzeigeeinrichtung zur Darstellung gebracht werden, die gerade nicht abgespielt werden, die sogar nicht einmal im Abspielgerät abgelegt sein müssen. Auf diese Weise wird der Bedienungskomfort und die Übersichtlichkeit für den Benutzer erhöht und die Bedienung vereinfacht, da jeder Speicherplatzeintrag jederzeit eingesehen werden kann.

Durch die in den Unteransprüchen aufgeführten Maßnahmen sind vorteilhafte Weiterbildungen und Verbesserungen des im Hauptanspruch angegebenen Abspielgerätes möglich.

Besonders vorteilhaft ist es, daß an der Anzeigeeinrichtung dargestellte Inhalte der Speichereinheit mittels der Eingabeeinheit geändert abspeicherbar oder löschbar sind. Auf diese Weise können Speichereinträge verändert oder gelöscht werden, ohne daß der Aufzeichnungsträger im Abspielgerät vorhanden sein muß. Somit wird die Bedienung des Abspielgerätes erheblich vereinfacht und Zeit eingespart, da zur Bearbeitung des Speicherinhaltes nicht der entsprechende Aufzeichnungsträger in das Abspielgerät eingelegt werden muß.

Vorteilhaft ist weiterhin, daß die Art der Darstellung eines Namens an der Anzeigeeinrichtung in Abhängigkeit von der Ablage und/oder dem Zustand eines dem Namen zugeordneten Aufzeichnungsträgers im Abspielgerät erfolgt. Auf diese Weise wird die Information des Benutzers auf einfache und übersichtliche Weise verbessert.

Vorteilhaft ist außerdem, daß die Speicherzugriffseinheit mindestens ein Bedienelement an der Eingabeeinheit umfaßt und daß durch Betätigung des mindestens einen Bedienelements eine Auswahl eines Speicherplatzes der Speichereinheit realisierbar ist. Somit ist für den Benutzer eine besonders einfache und übersichtliche Möglichkeit zur Auswahl eines Speicherplatzes gegeben, die zudem wenig Zeit erfordert.

### Zeichnung

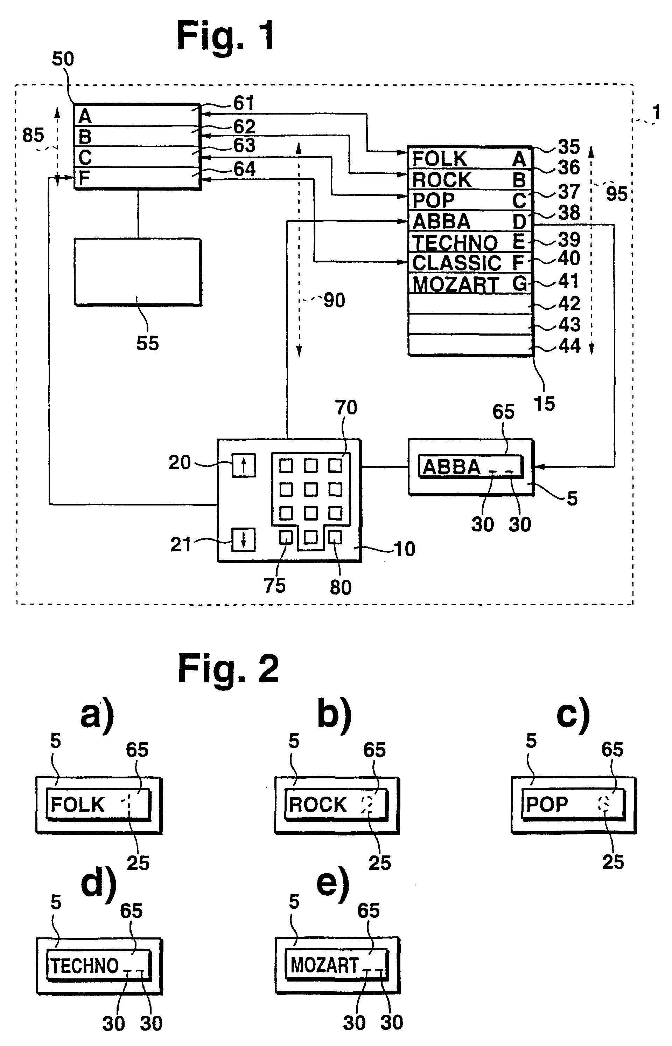

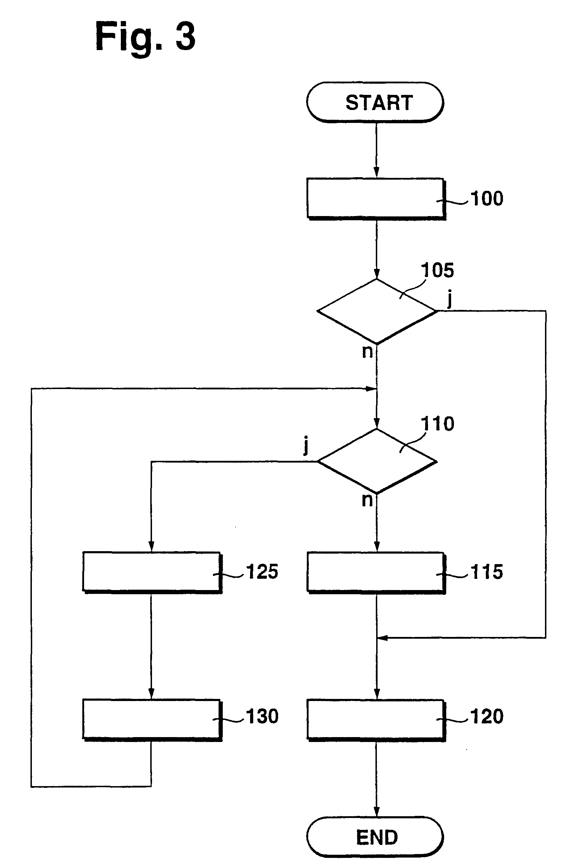

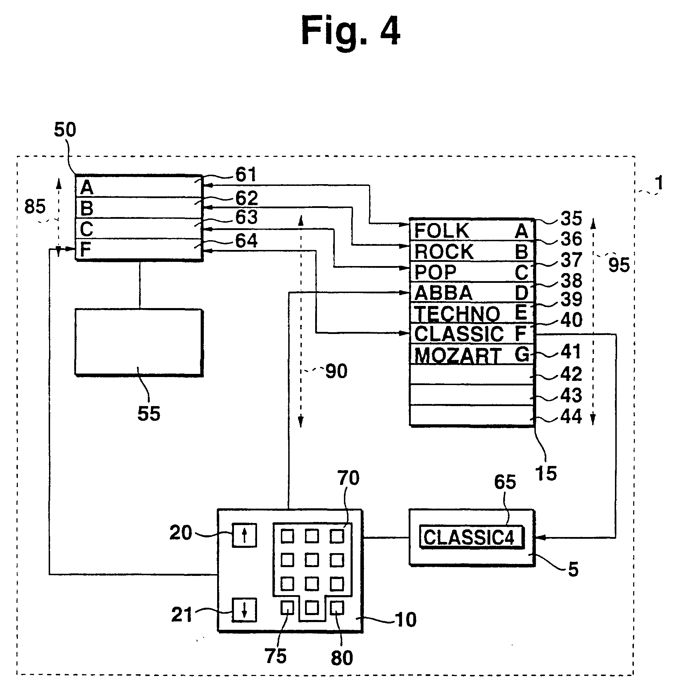

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Abspielgerätes, Figur 2 verschiedene Namensdarstellungen an einer Anzeigeeinheit des Abspielgerätes, Figur 3 einen Ablaufplan für eine Speicherbelegung bei Einlegen eines Aufzeichnungsträgers in das Abspielgerät und Figur 4 das Blockschaltbild gemäß Figur 1, jedoch mit unterschiedlichem Speicherzugriff.

### Beschreibung des Ausführungsbeispiels

In Figur 1 kennzeichnet 1 ein als Compact-Disc-Wechsler ausgebildetes Abspielgerät 1 mit einem Compact-Disc-Laufwerk 55, das an ein Magazin 50 mit vier Magazinplätzen 61, 62, 63, 64 versehen ist, so daß das Magazin 50 vier Compact-Discs umfaßt. Das Magazin 50 ist außerdem mit einer Eingabeeinheit 10 verbunden, die eine alphanumerische Zehnertastatur 70, eine Löschtaste 75, eine Speichertaste 80, ein erstes Bedienelement 20 und ein zweites Bedienelement 21 umfaßt. Die Eingabeeinheit 10 ist außerdem mit einer Anzeigeeinrichtung 5 verbunden, die ein Display 65 umfaßt. Der Compact-Disc-Wechsler 1 umfaßt weiterhin eine Speichereinheit 15 mit zehn Speicherplätzen 35, ..., 44. Die Speichereinheit 15 ist als Schreib-Lese-Speicher ausgebildet und mit der Eingabeeinheit 10 und der Anzeigeeinrichtung 5 verbunden. Die Speichereinheit 15 ist außerdem mit dem Magazin 50 verbunden. Im ersten Magazinplatz 61 ist eine erste Compact-Disc A eingelegt, im zweiten Magazinplatz 62 ist eine zweite Compact-Disc B eingelegt, im dritten Magazinplatz 63 ist eine dritte Compact-Disc C eingelegt und im vierten Magazinplatz 64 ist eine vierte Compact-Disc F eingelegt. Magazinplätze, in denen eine Compact-Disc eingelegt ist, sind jeweils einem Speicherplatz der Speichereinheit 15 zugeordnet. Die Zuordnung erfolgt dabei über einen Identifikator, der gemäß dem in Figur 1 dargestellten Beispiel als Großbuchstabe gewählt ist. So wird die erste Compact-Disc A durch den Identifikator A, die zweite Compact-Disc B durch den Identifikator B, die dritte Compact-Disc C durch den Identifikator C und die vierte Compact-Disc F durch den Identifikator F gekennzeichnet. Der jeweilige Identifikator befindet sich dabei in dem der jeweiligen Compact-Disc des entsprechenden Magazinplatzes 61, ..., 64 zugeordneten Speicherplatz 35, ..., 44 wieder. So ist der ersten Compact-Disc A im ersten Magazinplatz 61 der erste Speicherplatz 35, der zweiten Compact-Disc B im zweiten Magazinplatz 62 der zweite Speicherplatz 36, der dritten Compact-Disc C im dritten Magazinplatz 63 der dritte Speicherplatz 37 und der vierten Compact-Disc F im vierten Magazinplatz 64 der sechste Speicherplatz 40 zugeordnet. Dabei ist zu beachten, daß die Zuordnung nicht zwischen einem Magazinplatz und einem Speicherplatz, sondern zwischen einer in einem Magazinplatz abgelegten Compact-Disc und einem Speicherplatz erfolgt, so daß leeren Magazinplätzen auch kein Speicherplatz zugeordnet ist. Andererseits bleiben die Inhalte der Speicherplätze 35, ..., 44 unabhängig davon bestehen, ob die zugehörige Compact-Disc mit dem im entsprechenden Speicherplatz 35, ..., 44 gespeicherten Identifikator im Magazin 50 abgelegt ist oder nicht im Abspielgerät 1 vorliegt.

Für den Zugriff auf die Speicherplätze 35, ..., 44 gibt es zwei Möglichkeiten, einen direkten Zugriff und einen indirekten Zugriff. Der indirekte Zugriff auf die Speicherplätze 35, ..., 44 erfolgt dadurch, daß an der alphanumerischen Zehnertastatur 70 eine Zahl zwischen 1 und 4 zur Auswahl eines Magazinplatzes 61, ..., 64 eingegeben wird. Je nach Eingabe an der alphanumerischen Zehnertastatur 70 wird über die Eingabeeinheit 10 einer der vier Magazinplätze 61, ..., 64 adressiert, was durch einen ersten gestrichelten Doppelpfeil 85 am Rand des Magazins 50 in Figur 1 dargestellt ist. Gemäß Figur 1 wurde an der alphanumerischen Zehnertastatur 70 die Taste mit der Ziffer 4 gedrückt, so daß der vierte Magazinplatz 64 mit der vierten Compact-Disc F adressiert wird. Diese vierte Compact-Disc F wird daraufhin in das Laufwerk 55 gegeben und ist abspielbereit. Der von der Anzeigeeinrichtung 5 aktuell ausgelesene Speicherplatz der Speichereinheit 15 ist jedoch der vierte Speicherplatz 38 mit dem Namen "ABBA", so daß am Display 65 der Anzeigeeinrichtung 5 der Name "ABBA" eingeblendet ist. Aufgrund der Eingabe an der alphanumerischen Zehnertastatur 70 wird nun jedoch von der Anzeigeeinrichtung 5 der der vierten Compact-Disc F im vierten Magazinplatz 64 zugeordnete sechste Speicherplatz 40 ausgelesen, der den Namen "CLASSIC" beinhaltet, und dieser Name wird dann zur Anzeige am Display 65 gebracht.

Figur 4 zeigt das aus Figur 1 bekannte Blockschaltbild, wobei gleiche Bezugszeichen gleiche Elemente kennzeichnen. In Figur 4 greift nun die Anzeigeeinrichtung 5 im Gegensatz zur Figur 1 auf den sechsten Speicherplatz 40 zu und bringt den Namen "CLASSIC" am Display 65 zur Anzeige. Dabei wird dieser Name am Display 65 noch durch die Zahl 4 ergänzt, um dem Benutzer anzudeuten, daß die dem am Display 65 dargestellten Namen zugeordnete Compact-Disc aus dem vierten Magazinplatz 64 kommt. Da die Anzeige am Display 65 permanent ist, d. h. nicht blinkt, wird der Benutzer zusätzlich darüber informiert, daß die dem am Display 65 angezeigten Namen zugeordnete Compact-Disc sich derzeit im Laufwerk 55 befindet.

Ein direkter Zugriff auf die Speicherplätze 35, ..., 44 ist mittels der beiden als Richtungstasten ausgebildeten Bedienelemente 20, 21 möglich, die somit eine Speicherzugriffseinheit bilden. Im Ausführungsbeispiel gemäß Figur 1 bzw. Figur 4 ist der vierte Speicherplatz 38 direkt durch die Eingabeeinheit 10 adressiert. Durch einmalige Betätigung des ersten Bedienelementes 20 wird der dritte Speicherplatz 37, durch zweimalige Betätigung des Bedienelementes 20 der zweite Speicherplatz 36 und durch dreimalige Betätigung des ersten Bedienelementes 20 der erste Speicherplatz 35 adressiert. Durch Betätigung des ersten Bedienelementes 20 wird also die Speichereinheit 15 nach oben durchlaufen. Durch Betätigung des zweiten Bedienelementes 21 wird die Speichereinheit 15 entsprechend nach unten durchlaufen, so daß durch einmalige Betätigung des zweiten Bedienelementes 21 ausgehend von der Adressierung gemäß Figur 1 bzw. Figur 4 der fünfte Speicherplatz 39, durch zweimalige Betätigung des zweiten Bedienelementes 21 der sechste Speicherplatz 40, durch dreimalige Betätigung des zweiten Bedienelementes 21 der siebte Speicherplatz 41, durch viermalige Betätigung des zweiten Bedienelementes 21 der achte Speicherplatz 42 usw. adressiert wird. Durch einen zweiten gestrichelten Doppelpfeil 90 links von der Speichereinheit 15 ist diese variable direkte Adressierung der Speicherplätze 35, ..., 44 der Speichereinheit 15 durch die Eingabeeinheit 10 dargestellt.

Wird nun ausgehend von der Darstellung gemäß Figur 4 das erste Bedienelement 20 einmal betätigt, so wird durch die Eingabeeinheit 10 der dritte Speicherplatz 37 direkt adressiert und die Anzeigeeinrichtung 5 liest den in dem dritten Speicherplatz 37 gespeicherten Namen aus und bringt ihn am Display 65 zur Darstellung. Betätigt man anschließend das zweite Bedienelement 21, so wird durch die Eingabeeinheit 10 der vierte Speicherplatz 38 direkt adressiert, und die Anzeigeeinrichtung 5 liest den im vierten Speicherplatz 38 gespeicherten Namen aus und bringt ihn am Display 65 zur Anzeige gemäß der Darstellung in Figur 1. Der Zugriff der Anzeigeeinrichtung 5 auf die Speicherplätze 35, ..., 44 ist daher ebenfalls entsprechend variabel, was durch einen dritten gestrichelten Doppelpfeil 95 rechts der Speichereinheit 15 gemäß Figur 1 und Figur 4 dargestellt ist.

Findet während des Abspielens der vierten Compact-Disc F ein direkter Zugriff auf den ersten Speicherplatz 35 durch dreimalige Betätigung des ersten Bedienelementes 20 statt, so kommt der dort gespeicherte Name "FOLK" zur Anzeige am Display 65 gemäß Figur 2a). Da sich die zugehörige erste Compact-Disc A im ersten Magazinplatz 61 befindet, wird zusätzlich zu diesem Namen am Display 65 eine 1 dargestellt, die als blinkendes Zeichen 25 ausgeführt ist, so daß der Benutzer darüber informiert wird, daß die dem Namen zugehörige Compact-Disc im ersten Magazinplatz 61 eingelegt ist, jedoch derzeit nicht im Laufwerk 55 vorhanden ist. Wird anschließend einmal das zweite Bedienelement 21 betätigt, so wird der zweite Speicherplatz 36 durch die Eingabeeinheit 10 direkt adressiert und der dort gespeicherte Name "ROCK" am Display 65 zur Anzeige gebracht. Da die zugehörige Compact-Disc die zweite Compact-Disc B im zweiten Magazinplatz 62 ist, ist der Anzeige am Display 65 eine 2 hinzugefügt, die ebenso wie die 1 in Figur 2a) gestrichelt dargestellt und als blinkendes Zeichen 25 ausgebildet ist und somit dem Benutzer signalisiert, daß sich die zugehörige Compact-Disc im zweiten Magazinplatz 62 befindet und derzeit nicht im Laufwerk 55. Bei nochmaliger Betätigung des zweiten Bedienelementes 21 wird der dritte Speicherplatz 37 durch die Eingabeeinheit 10 direkt adressiert und der dort gespeicherte Name "POP" zur Darstellung am Display 65 der Anzeigeeinrichtung 5 gemäß Figur 2c) gebracht. Die zugehörige dritte Compact-Disc C befindet sich im dritten Magazinplatz 63, so daß dem Namen am Display 65 die Zahl 3 als blinkendes Zeichen 25 hinzugefügt und in Figur 2 gestrichelt dargestellt ist. Dadurch wird dem Benutzer signalisiert, daß sich die zugehörige Compact-Disc im dritten Magazinplatz 63 und derzeit nicht im Laufwerk 55 befindet. Wird das zweite Bedienelement 21 zwei weitere Male betätigt, so wird der fünfte Speicherplatz 39 durch die Eingabeeinheit 10 direkt adressiert und der dort gespeicherte Name "TECHNO" am Display 65 zur Anzeige gebracht. Da diesem fünften Speicherplatz 39 derzeit keine Compact-Disc im Magazin 50 zugeordnet ist, wird der Name am Display 65 durch zwei als Bindestrich ausgeführte Sonderzeichen 30 ergänzt. Auf diese Weise wird dem Benutzer signalisiert, daß die diesem Namen zugeordnete Compact-Disc derzeit weder im Magazin 50 noch im Laufwerk 55 vorliegt. Die entsprechende Darstellung ist Figur 2d) zu entnehmen. Dasselbe gilt gemäß Figur 2e) bei weiterer zweimaliger Betätigung des zweiten Bedienelementes 21 für den im siebten Speicherplatz 41 abgespeicherten Namen "MOZART", dessen zugeordnete Compact-Disc sich ebenfalls nicht im Abspielgerät 1 befindet. Daher wird auch der Name "MOZART" von zwei als Bindestrich ausgeführten Sonderzeichen 30 am Display 65 ergänzt.

Gemäß dem Ausführungsbeispiel nach Figur 1 bzw. Figur 4 sind nur die ersten sieben Speicherplätze 35, ..., 41 belegt, wohingegen die letzten drei Speicherplätze 42, 43, 44 nicht belegt sind.

Ein am Display 65 dargestellter Name kann mittels der alphanumerischen Zehnertastatur 70 geändert werden. Durch Betätigung der Speichertaste 80 wird ein geänderter Name im entsprechenden Speicherplatz 35, ..., 44 der Speichereinheit 15 durch Überschreiben des alten Namens abgespeichert. Durch Betätigung der Löschtaste 75 ist es auch möglich, den durch die Anzeigeeinrichtung 5 ausgelesenen und am Display 65 dargestellten Inhalt des entsprechenden Speicherplatzes 35, ..., 44 zu löschen. Es kann weiterhin an der Eingabeeinheit 10 ein in Figur 1 bzw. Figur 4 nicht dargestelltes Bedienelement vorgesehen sein, durch dessen Betätigung der gesamte Inhalt der Speichereinheit 15 gelöscht wird.

Mittels eines weiteren an der Eingabeeinheit 10 vorgesehenen Bedienelementes kann auch die Funktion realisiert werden, alle Speicherplätze zu löschen, denen keine Compact-Disc im Magazin 50 zugeordnet ist. Dabei wird ein Vergleich der Identifikatoren der in den Magazinplätzen 61, ..., 64 bzw. dem Laufwerk 55 abgelegten Compact-Discs mit den in den Speicherplätzen 35, ..., 44 abgelegten Identifikatoren durchgeführt und alle die Speicherplätze 35, ..., 44 gelöscht, deren Identifikator im Magazin 50 nicht gefunden werden konnte.

Durch Löschen der den Compact-Discs A, B, C, F zugeordneten Speicherplätzen 35, 36, 37, 40 geht auch die jeweilige Zuordnung zwischen der entsprechenden Compact-Disc und dem entsprechenden Speicherplatz verloren.

In Figur 3 ist ein Ablaufplan für den Einlegevorgang einer Compact-Disc in das Laufwerk 55 dargestellt. Bei Programmpunkt 100 erfolgt eine Eingabe an der alphanumerischen Zehnertastatur 70 einer Ziffer zwischen 1 und 4. Befindet sich am so ausgewählten Magazinplatz 61, ..., 64 eine Compact-Disc, so wird sie in das Laufwerk 55 geladen. Bei Programmpunkt 105 wird geprüft, ob der Identifikator dieser Compact-Disc in einem der Speicherplätze 35, ..., 44 abgelegt ist. Ist dies der Fall, so wird zu Programmpunkt 120 verzweigt, andernfalls wird zu Programmpunkt 110 verzweigt. Bei Programmpunkt 110 wird geprüft, ob die Speichereinheit 15 vollständig belegt ist. Ist dies der Fall, so wird zu Programmpunkt 125 verzweigt, andernfalls wird zu Programmpunkt 115 verzweigt. Bei Programmpunkt 115 wird ein freier Speicherplatz der Speichereinheit 15 mit dem Identifikator der Compact-Disc belegt. Anschließend wird Programmpunkt 120 ausgeführt. Bei Programmpunkt 120 wird der im zugehörigen Speicherplatz gespeicherte Name an der Anzeigeeinrichtung 5 dargestellt zusammen mit der Nummer des Magazinplatzes 61, ..., 64, aus dem die Compact-Disc in das Laufwerk 55 geladen wurde. Ist noch kein Name im entsprechenden Speicherplatz vorhanden, so wird nur die Nummer des Magazinplatzes dargestellt. Anschließend wird der Programmteil verlassen. Der Benutzer kann nun einen bereits vorhandenen Namen ändern oder, wenn noch kein Name vergeben wurde, die Compact-Disc erstmalig benennen. Bei Programmpunkt 125 wird am Display 65 der Anzeigeeinrichtung 5 eine Anzeige eingeblendet, die den Benutzer darüber informiert, daß die Speichereinheit 15 voll belegt ist. Anschließend wird Programmschritt 130 ausgeführt. Bei Programmschritt 130 wird eine vorgegebene Wartezeit eingestellt, während der der Benutzer die Möglichkeit hat, einen Speicherplatz durch direkten Zugriff auf die Speichereinheit 15 mittels der beiden Bedienelemente 20, 21 und der Löschtaste 75 zu löschen. Anschließend wird zu Programmpunkt 110 zurückverzweigt.

Die Erfindung ist nicht auf das beschriebene Ausführungsbeispiel beschränkt, sondern läßt sich auf alle Arten von Abspielgeräten 1 für Aufzeichnungsträger anwenden, also auch für alle Arten von Compact-Disc-Spielern, Kassetten- oder Tonbandgeräten oder dergleichen. Ist kein Magazin 50 vorgesehen, so kann das Laufwerk 55 zugleich als einziger Magazinplatz betrachtet werden und ein ins Laufwerk 55 eingelegter Aufzeichnungsträger einem Speicherplatz 35, ..., 44 der Speichereinheit 15 zugeordnet werden. Auch ist die bei dem beschriebenen Ausführungsbeispiel gewählte Anzahl der Magazinplätze bzw. der Speicherplätze nur beispielhaft gewählt und je nach Bedarf entsprechend anzupassen. Auch kann die am Display 65 durchgeführte Signalisierung, ob die dem dargestellten Namen zugehörige Compact-Disc aktuell im Magazin 50, im Laufwerk 55 oder nicht im Abspielgerät 1 vorhanden ist, auf andere Weise als der beschriebenen erfolgen.

Das Abspielgerät 1 kann dabei auch in einen Rundfunkempfänger, vorzugsweise ein Autoradio integriert sein.

Der direkte Zugriff der Eingabeeinheit 10 auf die Speichereinheit 15 kann auch über ein Bussystem erfolgen. Dies ist vor allem dann von Vorteil, wenn die Eingabeeinheit 10 körperlich vom Abspielgerät 1 getrennt ist.

## Patentansprüche

1. Abspielgerät (1) für Aufzeichnungsträger, insbesondere Compact-Disc-Spieler, Compact-Disc-Wechsler, Kassetten- oder Tonbandgerät, mit einer Anzeigeeinrichtung (5) und einer Speichereinheit (15), in der Namen für Aufzeichnungsträger ablegbar sind, mit einer Speicherzugriffseinheit (20, 21), über die die Inhalte der Speichereinheit (15) direkt auslesbar und zur Darstellung an der Anzeigeeinrichtung (5) bringbar sind, dadurch gekennzeichnet, daß eine Eingabeeinheit (10) zur Benennung eines Aufzeichnungsträgers auf einem mittels der Speicherzugriffseinheit (20, 21) auswählbaren Speicherplatz (35,...,44) der Speichereinheit (15) vorgesehen ist.

2. Abspielgerät (1) nach Anspruch 1, dadurch gekennzeichnet, daß die Speichereinheit (15) als Schreib-Lese-Speicher ausgebildet ist.

3. Abspielgerät (1) nach Anspruch 2, dadurch gekennzeichnet, daß an der Anzeigeeinrichtung (5) dargestellte Inhalte der Speichereinheit (15) mittels der Eingabeeinheit (10) geändert abspeicherbar sind.

4. Abspielgerät (1) nach Anspruch 2 oder 3, dadurch gekennzeichnet, daß an der Anzeigeeinheit (5) dargestellte Inhalte der Speichereinheit (15) mittels der Eingabeeinheit (10) löschbar sind.

5. Abspielgerät (1) nach einem der vorherigen Ansprüche, dadurch gekennzeichnet, daß im Abspielgerät (1) abgelegten Aufzeichnungsträgern Namen in der Speichereinheit (15) zuordenbar sind.

6. Abspielgerät (1) nach Anspruch 5, dadurch gekennzeichnet, daß die Art der Darstellung eines Namens an der Anzeigeeinrichtung (5) in Abhängigkeit von der Ablage und/oder dem Zustand eines dem Namen zugeordneten Aufzeichnungsträgers im Abspielgerät (1) erfolgt.

7. Abspielgerät (1) nach Anspruch 6, dadurch gekennzeichnet, daß der einem Aufzeichnungsträger zugeordnete und an der Anzeigeeinrichtung (5) dargestellte Name durch ein blinkendes Zeichen (25) ergänzt ist, wenn der Aufzeichnungsträger im Abspielgerät (1) abgelegt ist.

8. Abspielgerät (1) nach Anspruch 7, dadurch gekennzeichnet, daß das Zeichen (25) nicht blinkt, wenn sich der Aufzeichnungsträger in einem Laufwerk (55) des Abspielgerätes (1) befindet.

9. Abspielgerät (1) nach einem der Ansprüche 6 bis 8, dadurch gekennzeichnet, daß der einem Aufzeichnungsträger zugeordnete und an der Anzeigeeinrichtung (5) dargestellte Name durch mindestens ein Sonderzeichen (30) ergänzt ist, wenn der Aufzeichnungsträger nicht im Abspielgerät (1) abgelegt ist.

10. Abspielgerät (1) nach einem der vorherigen Ansprüche, dadurch gekennzeichnet, daß die Speicherzugriffseinheit (20, 21) mindestens ein Bedienelement an der Eingabeeinheit umfaßt und daß durch Betätigung des mindestens einen Bedienelements (20, 21) eine direkte Auswahl eines Speicherplatzes (35,...,44) der Speichereinheit (15) realisierbar ist.

## Claims

1. Playback appliance (1) for recording media, particularly a compact disc player, compact disc changer, cassette recorder or tape recorder, having a display device (5) and a memory unit (15) which can store names for recording media, having a memory access unit (20, 21) which can be used to read the contents of the memory unit (15) directly and to display them on the display device (5), characterized in that an input unit (10) is provided for naming a recording medium at a memory location (35, ..., 44) in the memory unit (15) which can be selected using the memory access unit (20, 21).

2. Playback appliance (1) according to Claim 1, characterized in that the memory unit (15) is in the form of a write/read memory.

3. Playback appliance (1) according to Claim 2, characterized in that contents of the memory unit (15) which are displayed on the display device (5) can be stored when they have been changed using the input unit (10) .

4. Playback appliance (1) according to Claim 2 or 3, characterized in that contents of the memory unit (15) which are displayed on the display unit (5) can be erased using the input unit (10).

5. Playback appliance (1) according to one of the preceding claims, characterized in that recording media stored in the playback appliance (1) can have names assigned to them in the memory unit (15).

6. Playback appliance (1) according to Claim 5, characterized in that the type of display of a name on the display device (5) depends on the storage and/or on the state of a recording medium associated with the name in the playback appliance (1).

7. Playback appliance (1) according to Claim 6, characterized in that the name associated with a recording medium and displayed on the display device (5) is complemented by a flashing symbol (25) when the recording medium is stored in the playback appliance (1).

8. Playback appliance (1) according to Claim 7, characterized in that the symbol (25) does not flash if the recording medium is in a drive (55) in the playback appliance (1).

9. Playback appliance (1) according to one of Claims 6 to 8, characterized in that the name associated with a recording medium and displayed on the display device (5) is complemented by at least one special symbol (30) if the recording medium is not stored in the playback appliance (1).

10. Playback appliance (1) according to one of the preceding claims, characterized in that the memory access unit (20, 21) comprises at least one control element on the input unit, and in that a memory location (35, ..., 44) in the memory unit (15) can be directly selected by operating the at least one control element (20, 21).

## Revendications

1. Appareil de lecture (1) de supports d'enregistrement, en particulier lecteur de disques compacts, changeur de disques compacts, appareil à cassettes ou à bande sonore, comprenant un dispositif indicateur (5) et une unité d'entrée (15) dans laquelle peuvent être déposés des noms pour désigner des supports d'enregistrement, une unité d'accès à la mémoire (20, 21) permettant de lire directement les contenus de l'unité de mémorisation (15) et de les transmettre au dispositif indicateur (5),
caractérisé en ce que
l'unité d'entrée (10) est prévue pour affecter la dénomination d'un support d'enregistrement à une place (35 à 44) d'une unité de mémorisation (15) au moyen de l'unité d'accès à la mémoire (20, 21).

2. Appareil (1) de lecture selon la revendication 1,
caractérisé en ce que
l'unité de mémorisation (15) est constituée par une mémoire à inscription/lecture.

3. Appareil (1) selon la revendication 2,
caractérisé en ce que
les contenus de l'unité de mémorisation (15) représentés dans le dispositif indicateur (5) peuvent être mis en mémoire sous une forme modifiée, au moyen de l'unité d'entrée (10).

4. Appareil (1) selon la revendication 2 ou 3,
caractérisé en ce que
les contenus de l'unité de mémorisation (15) affichés dans le dispositif indicateur (5) peuvent être effacés au moyen de l'unité d'entrée (10).

5. Appareil (1) selon l'une quelconque des revendications précédentes,
caractérisé en ce qu'
aux supports d'enregistrement déposés dans l'appareil de lecture (1) peuvent être associées des noms dans l'unité de mémorisation (15).

6. Appareil (1) selon la revendication 5,
caractérisé en ce que
le mode de représentation d'un nom dans le dispositif indicateur (5) se fait en fonction du dépôt et/ou de l'état dans l'appareil de lecture (1), d'un support d'enregistrement associé au nom.

7. Appareil (1) selon la revendication 6,
caractérisé en ce que
le nom associé à un support d'enregistrement et représenté dans le dispositif indicateur (5) est complété par un signe clignotant (25) quand le support d'enregistrement est déposé dans l'appareil de lecture (1).

8. Appareil (1) selon la revendication 7,
caractérisé en ce que
le signe (25) ne clignote pas si le support d'enregistrement se trouve sur un mécanisme d'entraînement (55) de l'appareil de lecture (1).

9. Appareil (1) selon l'une quelconque des revendications 6 à 8,
caractérisé en ce que
le nom associé à un support d'enregistrement et représenté dans le dispositif indicateur (5) est complété par au moins un signe spécifique (30), si le support d'enregistrement ne se trouve pas dans l'appareil de lecture (1).

10. Appareil (1) selon l'une quelconque des revendications précédentes,
caractérisé en ce que
l'unité d'accès à la mémoire (20, 21) comprend au moins un organe de service sur l'unité d'entrée et on peut, en actionnant au moins un tel organe (20, 21), choisir directement une place (35 à 44) de l'unité de mémorisation (15).
